(19) Europäisches Patentamt

European Patent Office

Office européen des brevets

(11) Veröffentlichungsnummer: **0 298 384 B1**

## (12) EUROPÄISCHE PATENTSCHRIFT

(45) Veröffentlichungstag der Patentschrift: **02.01.92**

(51) Int. Cl.⁵: **B60P 7/13**

(21) Anmeldenummer: **88110520.9**

(22) Anmeldetag: **01.07.88**

⸺

(54) Transportsicherung für Behälter, insbesondere Wechselbehälter.

⸺

(30) Priorität: **10.07.87 DE 8709539 U**

(43) Veröffentlichungstag der Anmeldung:
**11.01.89 Patentblatt 89/02**

(45) Bekanntmachung des Hinweises auf die
Patenterteilung:
**02.01.92 Patentblatt 92/01**

(84) Benannte Vertragsstaaten:
**AT BE CH DE ES FR GB IT LI LU NL SE**

(56) Entgegenhaltungen:
**DE-A- 1 456 673**
**US-A- 2 251 839**
**US-A- 2 273 854**
**US-A- 3 144 838**

(73) Patentinhaber: **EDELHOFF M.S.T.S. GMBH**
**Heckenkamp**
**W-5860 Iserlohn 5(DE)**

(72) Erfinder: **EDELHOFF M.S.T.S. GMBH**
**Heckenkamp**
**W-5860 Iserlohn 5(DE)**

(74) Vertreter: **Jabbusch, Wolfgang, Dr.**
**Elisabethstrasse 6**
**W-2900 Oldenburg(DE)**

# Beschreibung

Die Erfindung betrifft eine Transportsicherung für Behälter, insbesondere Wechselbehälter, die mit einem Hebezeug, zum Beispiel einem Wechselgerät, auf der Ladefläche eines Transportfahrzeuges absetzbar sind, umfassend an der Unterseite des Behälters in der Ebene seiner Auflagebereiche auf der Ladefläche angeordnete Justierelemente und an der Ladefläche angeordnete Halteorgane, wobei an jeweils einem Halteorgan ein zugeordnetes Justierelement in der Transportlage des Behälters gehalten ist und Justierelement und Halteorgan als gegenseitig in Eingriff bringbare Formschlußelemente ausgebildet sind.

Eine Transportsicherung der vorbezeichneten Gattung ist nach der US-A-2 251 839 bekannt. Der Wechselbehälter wird während seines Transportes auf Fahrzeugen gegen Verrutschen und Kippen durch eine Verriegelungseinrichtung gesichert, die an der Unterseite des Behälters angeordnete waagerechte Stifte umfassen, die sich in am Fahrzeug angeordnete Augen einschieben lassen, sobald der Behälter auf dem Fahrzeug seine für den Transport vorgesehene Endlage, die Transportlage, eingenommen hat. Die Einnahme der Endlage wird durch am Behälter und Fahrzeug zusätzlich zu der Verriegelung vorhandene Justierelemente sichergestellt. Nach der DE-A-14 56 673 sind auch betätigbare Verriegelungselemente bekannt, die aus um waagerechte Achsen, die in Längsrichtung des Fahrzeugs ausgerichtet sind, verschwenkbaren hakenförmigen Laschen bestehen, die an der Behälterunterseite befindliche Flansche von Verstärkungsprofilen, Bodenschienen oder dergleichen Vorsprüngen übergreifen können und dadurch den Behälter auch gegen Abheben von der Ladefläche sichern. Zusätzlich sind ebenfalls noch Justierelemente vorhanden.

Die bekannten Systeme zur Transportsicherung von Wechselbehältern haben den Nachteil, daß sie auf die Verwendung in Verbindung mit einem bestimmten Hebezeug, zumeist einem an sich bekannten Wechselgerät, speziell angepaßt sind. Wie die DE-A-14 56 673 zeigt, ist es durchaus üblich, Wechselbehälter nicht mit einem Wechselgerät, sondern mit einem Kran auf Transportfahrzeuge aufgesetzt bzw. davon abgenommen werden. Denkbar ist dies bei Eisenbahnwagen, Lastwagenanhängern, Wasserfahrzeugen und dergleichen, wobei auch insbesondere sogenannte Ladekräne zum Einsatz kommen können, mit denen Fahrzeuge häufig ausgerüstet sind, um das Auf- und Abladen z.B. von Stückgut zu erleichtern.

Die Justierelemente der bekannten Transportsicherungen verhindern aber gerade eine Bewegung der Behälter in einer Richtung parallel zur Ladefläche, auf der die Behälter stehen bzw. abgesetzt werden sollen, so daß ein mit einem Kran aufgeladener Behälter z.B. nicht mit einem anderen Hebezeug, einem Wechselgerät, abgeladen werden kann.

Der Erfindung liegt die Aufgabe zugrunde, eine Transportsicherung so auszubilden, daß sie ihre Funktion sowohl bei einem Umschlag der Behälter mit an sich bekannten Wechselgeräten als auch mit anderen Hebezeugen, wie z.B. einem üblichen Kran, erfüllen kann.

Diese Aufgabe ist erfindungsgemäß dadurch gelöst, daß jedes Halteorgan aus nebeneinander stehenden Nocken besteht, daß jedes Justierelement ein zwischen die Nocken setzbares vorspringendes Teil ist und daß ein jeweils einer Stirnseite einer Fahrzeugladefläche zugekehrter erster Nocken des Halteorgans flacher als der jeweils damit zusammenwirkende benachbarte zweite Nocken des gleichen Halteorgans ist.

Die Justierelemente legen die Position fest, die der Behälter auf der Ladefläche eines Fahrzeuges einnehmen soll. Justierelemente und Halteorgane können deshalb als konstruktiv einfache Anschläge ausgebildet werden, die sich aneinanderlegen, sobald der Behälter seine endgültige Transportstellung auf der Ladefläche eingenommen hat, wobei es keine Rolle spielt, ob er diese Transportstellung durch Einwirkung eines Wechselgerätes erreicht oder durch Einwirkung eines anderen Hebezeugs, beispielsweise eines üblichen Krans. Durch erfindungsgemäße Ausbildung von Justierelement und Halteorgan ist gewährleistet, daß jedes Justierelement am Halteorgan in der vorgesehenen Transportlage des Behälters gehalten wird, wodurch die gewünschte Justierung gewährleistet ist.

Die gewünschte Verriegelung kann dabei z.B. dadurch erreicht werden, daß Justierelement und Halteorgan als gegenseitig in Eingriff bringbare Formschlußelemente ausgebildet sind. Diese Formschlußelemente sind so ausgerichtet, daß ein Justierelement am Behälter in das zugeordnete Halteorgan an der Ladefläche des Fahrzeugs von oben frei beweglich eingeführt bzw. herausgeführt werden kann, sobald der Behälter auf die Ladefläche abgesenkt oder davon abgehoben wird. Dabei ist wieder unerheblich, ob das Absenken oder Anheben mittels eines Krans oder eines Wechselgeräts erfolgt. Da Justierelement und Halteorgan als Verriegelung und gleichzeitig als die Transportlage des Behälters festlegende, justierende Anschläge dienen, ist ein auf einer Ladefläche eines Fahrzeugs abgesetzter Behälter gegen Brems- und Beschleunigungskräfte gesichert, die in Längsrichtung des Fahrzeugs während des Transports wirken. Durch die Ausbildung als Formschlußelemente kann gleichzeitig auch eine Sicherung gegen quer zur Fahrzeuglängsachse bzw. Behälterlängsachse wirkende Kräfte erreicht werden. Dies ist dadurch möglich, daß jedes Halteorgan wenigstens eine Hinterschneidung aufweist und daß das Justierelement mindestens einen in die Hinterschneidung eingreifenden Vorsprung hat, wodurch der Formschluß gewährleistet ist, sobald der Behälter auf der Ladefläche steht. Dabei kann der Formschluß z.B. schwalbenschwanzförmig oder auch keilförmig sein.

Da jedes Halteorgan aus nebeneinander stehenden Nocken besteht, wobei jedes Justierelement ein zwischen die Nocken setzbares vorspringendes Teil ist, greift das Justierelement zwischen jeweils zwei Nocken eines Halteorgans, sobald der Behälter auf der Ladefläche steht, mit dem Vorteil, daß eine Sicherung des Behälters gegen Längs- und Querkräfte während des Transports gegeben ist.

Die für das Auf- und Absetzen mit einem Wechselgerät notwendige Verschiebebewegung des Behälters auf der Ladefläche durch die nebeneinanderstehenden Nocken des Halteorgans wird nicht behindert, da ein jeweils einer Stirnseite einer Fahrzeugladefläche zugekehrter erster Nocken des Halteorgans flacher als der jeweils damit zusammenwirkende benachbarte zweite Nocken des gleichen Halteorgans ist. Dadurch ist es möglich, einen Behälter mit einem Wechselgerät auf der Ladefläche zu bewegen. Das Justierelement kann bei Schiebebewegungen des Behälters ohne Behinderung über den flachen ersten Nocken geschoben werden, weil das Wechselgerät den Behälter üblicherweise auch leicht angehoben verschieben kann. Sobald das Justierelement an den zweiten höheren Nocken des gleichen Halteelementes angeschlagen ist, ist die endgültige Lage des Behälters auf der Ladefläche erreicht und kann sich der Behälter absenken, so daß das Justierelement nunmehr gesichert zwischen den beiden Nocken liegt.

Jedes Justierelement ist eine an eine vorstehende Bodenschiene seitlich angesetzte, parallel zum Boden des Behälters ausgerichtete Lasche. Das freie Ende dieser Lasche kann schwalbenschwanzförmig oder keilförmig ausgebildet sein, um den bereits erwähnten Formschluß mit den entsprechend ausgebildeten Nocken zu bewirken.

Jeder Nocken ist vorzugsweise ein auf der Ladefläche befestigter Klotz. Solche Klötze können auch direkt an der Kippbrücke eines Wechselgerätes angeordnet werden, mit dem zum Beispiel ein Kraftfahrzeug ausgerüstet ist.

Vorzugsweise sind für jeden auf einer Ladefläche stehenden Behälter jeweils vier Justierelemente und Halteorgane vorgesehen.

Es ist jedoch auch möglich, für jeden Behälter zwei im Bereich einer seiner Stirnseiten sichernde Justierelemente und Halteorgane vorzusehen, wobei die jeweils andere Stirnseite mit einer an sich bekannten betätigbaren Verriegelung gesichert sein kann. Allerdings muß die Verriegelung gelöst werden, sobald der Behälter von der Ladefläche abgenommen oder wieder aufgesetzt werden soll. Dies kann z. B. durch hydraulische, pneumatische aber auch mechanische Betätigung erfolgen. Jede Verriegelung kann z.B. eine in zugeordnete Aufnahmen am Behälter einsetzbare Klammerbacke umfassen, wobei die Klammerbacke um entsprechende Achsen gelenkig bewegbar ist, und die Bewegung durch Hydraulik, Pneumatik oder Mechanik erzeugt wird.

Ausführungsbeispiele der Erfindung, aus denen sich weitere erfinderische Merkmale ergeben, sind in der Zeichnung dargestellt. Es zeigen:

Fig. 1      die schematische Seitenansicht eines Fahrzeuges mit aufgeladenem Wechselbehälter,

Fig. 2      ein erstes Ausführungsbeispiel einer Transportsicherung,

Fig. 3      einen Teil der Transportsicherung gemäß Fig. 2 in der Transportstellung,

Fig. 4      eine zweite Ausführungsform der Transportsicherung,

Fig. 5      eine dritte Ausführungsform,

Fig. 6      eine schematische Draufsicht auf eine Ladefläche eines Fahrzeugs mit aufgeladenem Behälter, von dem lediglich die an der Transportsicherung beteiligten Bauteile dargestellt sind,

Fig. 7      ein Detail einer Transportsicherung in einer Draufsicht entsprechend Fig. 6,

Fig. 8      eine weitere Ausführungsform einer Transportsicherung in einer Ansicht entsprechend Fig. 7,

Fig. 9      eine andere Ausführungsform einer Transportsicherung in einer Ansicht entsprechend Fig. 7 und

Fig. 10      eine Ansicht eines Fahrzeugs mit auf der Ladefläche aufgenommenem Behälter entsprechend Fig. 6, von der linken Stirnseite des Fahrzeugs aus gesehen.

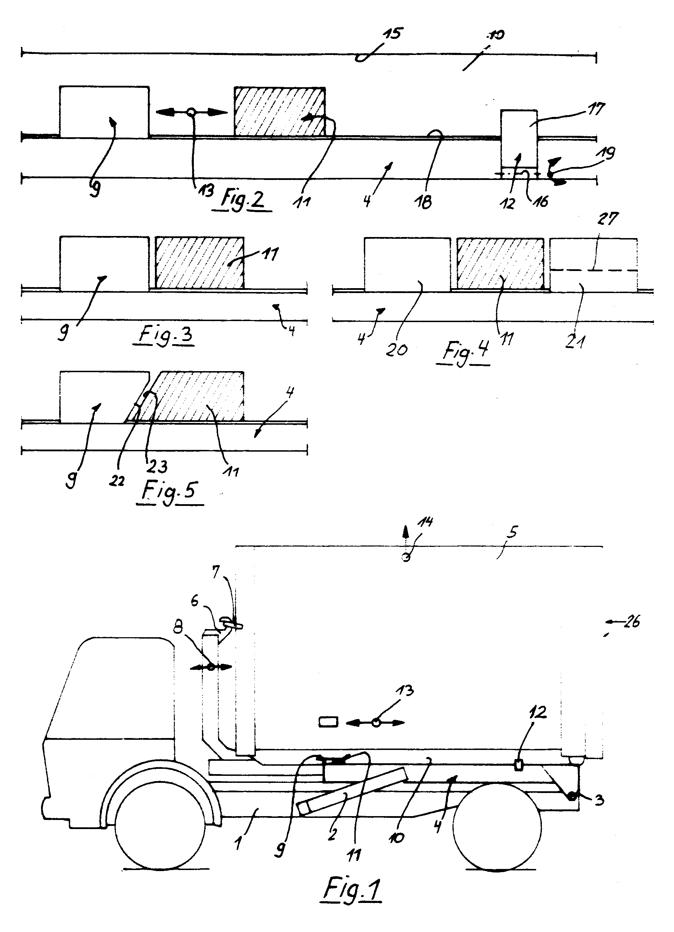

In Fig. 1 ist ein Lastkraftwagen in der Seitenansicht dargestellt, dessen Chassis 1 mit einem Wechselgerät ausgerüstet ist, bei dem die mittels eines Arbeitszylinders 2 um einen hinteren Drehpunkt 3 verschwenkbare Kippbrücke als Ladefläche 4 dient, auf der ein an sich bekannter Wechselbehälter 5 aufgenommen ist. Das Wechselgerät ist ein sogenanntes Hakengerät, das mit seinem Haken 6 in einen Beschlag 7 am Behälter eingreifen kann. Der Haken 6 ist in Richtung des Pfeiles 8 relativ zur Kippbrücke des Wechselgerätes in Längsrichtung des Fahrzeugchassis 1 beweglich. An der als Ladefläche 4 dienenden Kippbrücke des Wechselgerätes befindet sich ein Halteorgan 9. Der Wechselbehälter 5 hat an seiner Unterseite verstärkende Bodenschienen 10. Mit den Bodenschienen gleitet der Wechselbehälter auf der als Ladefläche 4 dienenden Kippbrücke des Wechselgerätes. An der Unterseite des Wechselbehälters, vorzugsweise an seinen Bodenschienen 10, befinden sich Justierelemente 11.

Im hinteren Bereich ist an der als Ladefläche 4 dienenden Kippbrücke eine an sich bekannte Verriegelung 12 angeordnet, die z.B. als umlegbare Klammer ausgebildet sein kann, die hinter einen Flansch der Bodenschiene 10 greift.

Während des Aufnehmens des Wechselbehälters 5 erfolgt ein Verschieben des Wechselbehälters mit dem Haken 6 auf der als Ladefläche 4 dienenden Kippbrücke des Wechselgerätes nach links, bis das Justierelement 11, welches am Wechselbehälter angeordnet ist, an das Halteorgan 9, welches an der Kippbrücke bzw. der Ladefläche 4 befestigt ist, anschlägt. Der Wechselbehälter hat dann seine Transportlage eingenommen. Gleichzeitig ist er durch gegenseitiges Anschlagen von Halteorgan und Justierelement gegen Verrutschen in einer Richtung des Doppelpfeils 13 gesichert. Die zweite Richtung ist bereits durch den am BeSchlag 7 ziehenden und deshalb anliegenden Haken 6 gesichert. Zur zusätzlichen Sicherung wird noch die an sich bekannte Verriegelung 12 in Verrastungsstellung gebracht.

Der Behälter kann nach Öffnen der Verriegelung sowohl mit dem hier dargestellten Wechselgerät abgesetzt werden. Dennoch ist es aufgrund der besonderen Bauart der Transportsicherung möglich, den hier in seiner Transportlage dargestellten Behälter auch mit einem anderen Hebezeug, beispielsweise einem üblichen Kran, lotrecht nach oben in Richtung des Pfeils 14 vom Fahrzeug abzuheben oder auch abzusetzen.

In Fig. 2 ist eine Bodenschiene 10 eines hier nicht weiter sichtbaren Wechselbehälters teilweise in der Seitenansicht dargestellt. Mit 4 ist eine Ladefläche bezeichnet, die ebenfalls durch ein Profil gebildet sein kann. An diesem die Ladefläche 4 bildenden Profil ist ein Halteorgan 9 so angeordnet, daß es gegen die Unterseite des hier nicht sichtbaren Behälters vorsteht, wobei die Unterseite durch den oberen Flansch 15 der Bodenschiene 10 angegeben wird, der hier als einfacher Strich gezeichnet ist.

Das Justierelement 11 ist an der Bodenschiene 10 angeordnet und steht aus der Zeichnungsebene heraus vor, so daß bei Verschieben der Bodenschiene 10 bzw. des ganzen Wechselbehälters in Richtung des Doppelpfeiles 13, Justierelement 11 und Halteorgan 9 gegeneinander geschoben werden oder sich voneinander entfernen.

Mit 12 ist wieder eine Verriegelung schematisch angedeutet, die hier als um eine Klappachse 16 an der Ladefläche angelenkte Klammerbacke 17 ausgebildet ist, die einen unteren Flansch 18 der Bodenschiene 10 umgreifen bzw. freigeben kann, wenn eine Verschwenkung in Richtung des Kreisbogenpfeils 19 mit Hilfe geeigneter Betätigungselemente erfolgt, die hier nicht weiter dargestellt sind.

Fig. 3 zeigt eine Ansicht entsprechend Fig. 2, wobei Halteorgan 9 und Justierelement 11 durch Verschieben des Behälters relativ zur Ladefläche 4 nach links so weit verschoben sind, daß nahezu ein Anschlag gegeben ist, bzw. der Behälter seine Transportlage nahezu eingenommen hat.

Fig. 4 zeigt eine zweite Ausführungsform einer Transportsicherung, bei der das Halteorgan aus nebeneinander stehenden Nocken 20 und 21 besteht, zwischen die das Justierelement 11 formschlüssig einsetzbar ist, indem der Behälter von oben auf die Ladefläche 4 abgesenkt wird.

Fig. 5 zeigt eine dritte Ausführungsform, bei der das Halteorgan 9 eine Hinterschneidung 22 aufweist und das Justierelement 11 einen in die Hinterschneidung 22 eingreifenden Vorsprung 23 besitzt. Halteorgan und Justierelement sind in einer Position dargestellt, bei welcher der Behälter die Transportlage eingenommen hat. Durch Hinterschneidung und Vorsprung ist eine Formschlußverbindung zwischen Halteorgan 9 und Justierelement 11 gewährleistet, die einen aufgenommenen Behälter auch gegen Kippkräfte sichern kann.

Es ist möglich, einen Behälter im vorderen Bereich unten mit einer Transportsicherung entsprechend Fig. 3 auszubilden, wobei die in Fig. 1 und Fig. 2 sichtbare Verriegelung 12 durch eine Transportsicherung entsprechend Fig. 5 ersetzt werden kann.

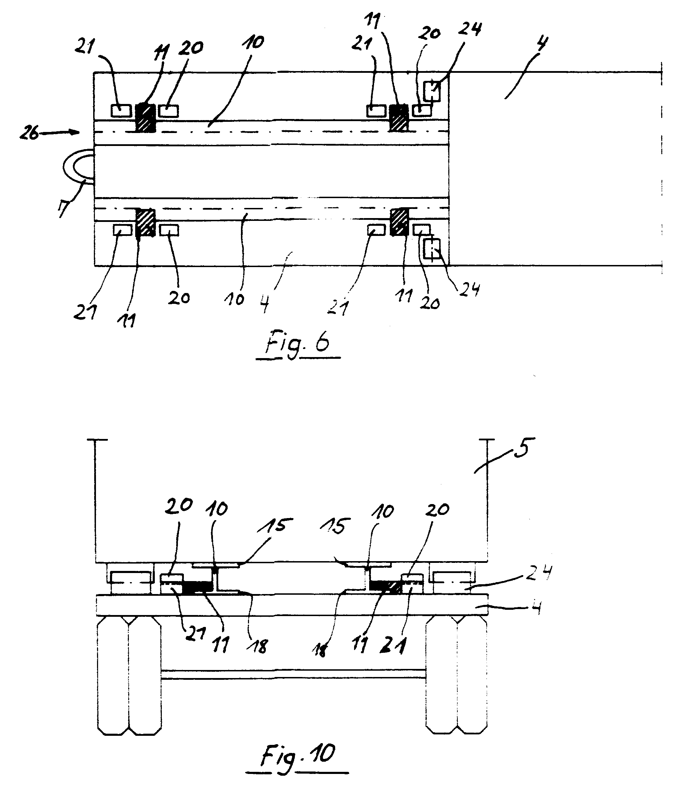

Fig. 6 zeigt eine Draufsicht auf eine Ladefläche 4 eines Fahrzeugs mit aufgesetztem Wechselbehälter, der hier durch seine Bodenschienen 10 sowie den Beschlag 7 verdeutlicht ist. Mit 24 sind im Bereich der hinteren Stirnseite am Behälter befindliche Rollelemente bezeichnet, mit denen an sich bekannte Wechselbehälter ausgerüstet sind.

Bei diesem Ausführungsbeispiel ist eine Transportsicherung entsprechend Fig. 4 vorgesehen. Auf der Ladefläche befinden sich vier Halteorgane, die aus jeweils nebeneinander stehenden Nocken 20 und 21 bestehen. Die Bodenschienen 10, die als parallel zueinander verlaufende Doppel-T-Profile ausgebildet sind, weisen vier Justierelemente 11 auf. Jedes Justierelement 11 ist eine an eine Bodenschiene 10 seitlich angesetzte vorstehende Lasche.

Bei Verschiebebewegungen des Behälters auf der Ladefläche zwecks Aufnehmens oder Absetzens mit einem Wechselgerät können die im Verschiebeweg des in seine Transportlage zu verschiebenden Behälters zunächst vorstehenden Nocken der Halteorgane hinderlich sein. Um zu vermeiden, daß bereits die der Verschiebebewegung zugekehrten Flächen der Nocken eine weitere Verschiebebewegung verhindern, ist vorgesehen, daß ein jeweils einer Stirnseite einer Fahrzeugladefläche 4 zugekehrter erster Nocken 21 jedes Halteorgans 9 flacher als der jeweils damit zusammenwirkende benachbarte zweite Nocken 20 des gleichen Halteorgans ist. In Fig. 1 und in Fig. 6 ist eine Stirnseite einer Ladefläche durch den Pfeil 26 angedeutet. In Fig. 4 ist darüberhinaus durch die gestrichelte Linie 27 am linken Nocken 21 gezeigt, daß der Nocken 21 etwa halbhoch sein kann.

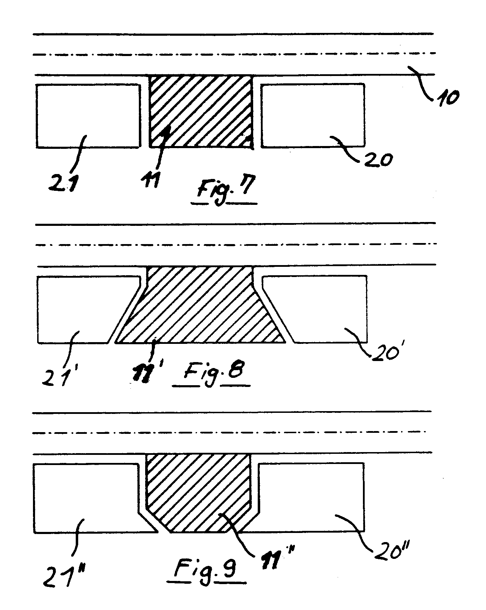

Fig. 7 zeigt eine Detailansicht einer der Transportsicherungen entsprechend Fig. 6 in der Draufsicht, wobei die Bodenschiene wieder mit 10 bezeichnet ist. In Fig. 7 ist der obere Flansch der Bodenschiene 10 sichtbar. Der Steg der Bodenschiene ist durch die strichpunktierte Linie angedeutet. Die beiden Nocken 20 und 21 des Halteorgans sind einfache Klötze, wobei sichtbar ist, wie das als Lasche ausgebildete Justierelement 11 zwischen die beiden Nocken 20 und 21 formschlüssig eingreift.

Fig. 8 zeigt eine andere Ausführungsform in der Draufsicht entsprechend Fig. 7.

Die Nocken 20' und 21' sowie das Justierelement 11' sind hier mit Hinterschneidungen versehen, so daß in der Transportlage eine formschlüssige Verbindung möglich ist. Bei dieser Ausführungsform weist die Lasche etwa schwalbenschwanzförmigen Umriß auf. In Fig. 9 ist eine weitere Ausführungsform des gegenseitigen Formschlusses der Nocken 21'' und 20'' mit dem Justierelement 11'' dargestellt.

Zwei nebeneinander befindliche Nocken, zwischen die eine Lasche eingreift, sichern den Behälter auf der Ladefläche optimal gegen Brems- und Beschleunigungskräfte sowie in Verbindung mit den Bodenschienen 10 gegen Querkräfte bei Kurvenfahrten.

Fig. 10 zeigt eine Ansicht entsprechend Fig. 6 in Richtung des Pfeils 26, von links gesehen. Gleiche Bauteile sind mit gleichen Bezugszahlen bezeichnet. Fig. 10 läßt erkennen, wie das Justierelement 11 an den Bodenschienen 10 angebracht ist und wie die Nocken 21 und 20 auf der Ladefläche 4 stehen. Der Behälter 5 hat seine Transportlage eingenommen und ist durch das Justierelement 11, das zwischen die beiden Nocken greift, gegen weiteres Verschieben gesichert. Dennoch kann bei dieser Ausführungsform der Transportsicherung der Wechselbehälter 5 lotrecht nach oben, beispielsweise mit einem Hebezeug, von der Ladefläche 4 abgehoben werden. Auch der Umschlag des Behälters 5 mittels eines Wechselgerätes ist ohne weiteres möglich, indem der Behälter 5 mit dem Wechselgerät zunächst so weit angehoben wird, daß das Justierelement 11 über den etwas flacheren Nocken 21 hinweggehoben wird, wobei gleichzeitig ein Verschieben des Wechselbehälters auf der Ladefläche 4 erfolgen kann.

**Patentansprüche**

1. Transportsicherung für Behälter, insbesondere Wechselbehälter, die mit einen Hebezeug, zum Beispiel einem Wechselgerät, auf der Ladefläche eines Transportfahrzeuges absetzbar sind, umfassend an der Unterseite des Behälters in der Ebene seiner Auflagebereiche auf der Ladefläche angeordnete Justierelemente und an der Ladefläche angeordnete Halteorgane, wobei an jeweils einem Halteorgan ein zugeordnetes Justierelement in der Transportlage des Behälters gehalten ist und Justierelement und Halteorgan als gegenseitig in Eingriff bringbare Formschlußelemente ausgebildet sind,
dadurch gekennzeichnet,
daß jedes Halteorgan (9) aus nebeneinander stehenden Nocken (20,21) besteht,
daß jedes Justierelement (11) ein zwischen die Nocken (20,21) setzbares vorspringendes Teil ist
und daß ein jeweils einer Stirnseite einer Fahrzeugladefläche (4) zugekehrter erster Nocken (21) des Halteorgans (9) flacher als der jeweils damit zusammenwirkende benachbarte zweite Nocken (20) des gleichen Halteorgans ist.

2. Transportsicherung nach Anspruch 1, dadurch gekennzeichnet, daß jedes Halteorgan (9) wenigstens eine Hinterschneidung (22) aufweist und daß das Justierelement (11) mindestens einen in die Hinterschneidung (22) eingreifenden Vorsprung (23) hat.

3. Transportsicherung nach einem der Ansprüche 1 und 2, gekennzeichnet durch schwalbenschwanzförmigen Formschluß von Halteorgan (9) und Justierelement (11).

4. Transportsicherung nach einem der Ansprüche 1 und 2, gekennzeichnet durch keilförmigen Formschluß von Halteorgan (9) und Justierelement (11.)

5. Transportsicherung nach einem der vorhergehenden Ansprüche, dadurch gekennzeichnet, daß jedes Justierelement (11) als an eine vorstehende Bodenschiene (10) des Behälters (5) seitlich angesetzte, parallel zum Boden des Behälters (5) ausgerichtete Lasche ausgebildet ist.

6. Transportsicherung nach einem der vorhergehenden Ansprüche, dadurch gekennzeichnet, daß jeder Nocken (20,21;20',21';20'',21'') ein auf der Ladefläche (4) befestigter Klotz ist.

7. Transportsicherung nach einem der Ansprüche 1 bis 6, dadurch gekennzeichnet, daß für jeden Behälter (5) jeweils vier Justierelemente (11) und Halteorgane (9) vorgesehen sind.

8. Transportsicherung nach einem der vorhergehenden Ansprüche, dadurch gekennzeichnet, daß für jeden Behälter (5) zwei den Behälter im Bereich einer seiner Stirnseiten sichernden Justierelemente (11) und Halteorgane (9) vorgesehen sind und daß die jeweils andere Stirnseite mit einer an sich bekannten betätigbaren Verriegelung (12) gesichert ist.

9. Transportsicherung nach Anspruch 8, dadurch gekennzeichnet, daß jede Verriegelung (12) eine in zugeordnete Aufnahmen am Behälter (5) einsetzbare Klammerbacke (12) umfaßt.

**Claims**

1. A transportation securing arrangement for containers, particularly exchangeable containers, which can be deposited on the loading surface of a transport vehicle using a lifting appliance, for example an exchanging device, comprising on the lower side of the container in the plane of its bearing regions adjusting elements arranged on the loading surface and holding members arranged on the loading surface, wherein on each holding member an associated adjusting element is held in the transportation position of the container, and adjusting element and holding member are designed as mutually engageable positive-locking elements, characterised in that each holding member (9) comprises cams (20, 21) located side by side, in that each adjusting element (11) is a projecting part which can be placed between the cams (20, 21) and in that a first cam (21) of the holding member (9), which cam (21) faces a front face of a vehicle loading surface (4), is flatter than the adjacent second cam (20) - cooperating therewith - of the same holding member.

2. A transportation securing arrangement according to claim 1, characterised in that each holding member (9) has a least one undercut (22) and in that the adjusting element (11) has at least one projection (23) engaging in the undercut (22).

3. A transportation securing arrangement according to either one of claims 1 and 2, characterised by dovetailed positive-locking of holding member (9) and adjusting element (11).

4. A transportation securing arrangement according to either one of claims 1 and 2, characterised by wedge-shaped positive-locking of holding member (9) and adjusting element (11).

5. A transportation securing arrangement according to any one of the preceding claims, characterised in that each adjusting element (11) is designed as a fishplate aligned so as to be parallel to the base of the container (5) and laterally attached to a projecting base rail (10) of the container (5).

6. A transportation securing arrangement according to any one of the preceding claims, characterised in that each cam (20, 21; 20', 21'; 20'', 21'') is a block secured to the loading surface (4).

7. A transportation securing arrangement according to any one of claims 1 to 6, characterised in that four adjusting elements (11) and four holding members (9) are provided for each container (5).

8. A transportation securing arrangement according to any one of the preceding claims, characterised in that for each container (5) two holding members (9) and adjusting elements (11) securing the container in the region of one of its front faces are provided and in that the other front face is secured by an actuatable locking mechanism (12) known per se.

9. A transportation securing arrangement according to claim 8, characterised in that each locking mechanism (12) comprises a clamping jaw (12) which can be inserted into associated receptacles on the container (5).

**Revendications**

1. Fixation de transport pour conteneurs, notamment pour des conteneurs interchangeables qui peuvent être déposés au moyen d'un engin de levage, par exemple un dispositif d'échange, sur la surface de chargement d'un véhicule de transport, comportant des éléments d'ajustage disposés sur la face inférieure du conteneur, dans le plan de ses zones d'appui sur la surface de chargement et des organes de retenue disposés sur la surface de chargement, un élément d'ajustage étant associé à chaque organe de retenue et maintenu sur celui-ci dans la position de transport et l'élément d'ajustage et l'organe de retenue étant des éléments de forme concordante pouvant être amenés en prise réciproque, caractérisée en ce que chaque organe de retenue (9) est constitué par des cames (20,21) juxtaposées, en ce que chaque élément d'ajustage (11) est un élément saillant à placer entre les cames (20, 21) et en ce qu'une première came (21) de l'organe de retenue (9), tournée vers un côté frontal d'une surface de chargement de véhicule (4), est plus plate que la deuxième came (20) du même organe de retenue, voisine et coopérant avec la première.

2. Fixation de transport selon la revendication 1, caractérisée en ce que chaque organe de retenue (9) présente au moins un détalonnage (22) et en ce que l'élément d'ajustage (11) possède au moins une partie saillante (23) s'engageant dans le détalonnage (22).

3. Fixation de transport selon l'une des revendications 1 et 2, caractérisée par un assemblage en queue d'aronde de l'organe de retenue (9) et de l'élément d'ajustage (11).

4. Fixation de transport selon l'une des revendications 1 et 2, caractérisée par un assemblage claveté de l'organe de retenue (9) et de l'élément d'ajustage (11).

5. Fixation de transport selon l'une des revendications précédentes, caractérisée en ce que chaque élément d'ajustage (11) est une éclisse parallèle au fond du conteneur (5), placée sur le côté d'un rail de fond (10) saillant du conteneur (5).

6. Fixation de transport selon l'une des revendications précédentes, caractérisée en ce que chaque came (20, 21 ; 20', 21'; 20", 21") est une cale fixée sur la surface de chargement.

7. Fixation de transport selon l'une des revendications 1 à 6, caractérisée en ce qu'il est prévu quatre éléments d'ajustage (11) et organes de retenue (9) pour chaque conteneur (5).

8. Fixation de transport selon l'une des revendications précédentes, caractérisée en ce qu'il est prévu pour chaque conteneur (5), deux éléments d'ajustage (11) et organes de retenue (9) bloquant le conteneur dans la région de l'une de ses faces frontales et en ce que l'autre face frontale est bloquée par un verrouillage (12) actionnable, connu en soi.

9. Fixation de transport selon la revendication 8, caractérisée en ce que chaque verrouillage (12) comporte une mâchoire à pinces (12) à insérer dans des logements correspondants du conteneur (5).

Fig.2

Fig.3

Fig.4

Fig.5

Fig.1

Fig. 6

Fig. 10

Fig. 7

Fig. 8

Fig. 9